# DEMANDE DE BREVET EUROPEEN

(11) **EP 2 819 251 A1**
(43) Date de publication de la demande: **31.12.2014**
(21) Numéro de dépôt: 14173596.9
(22) Date de dépôt: 24.06.2014
(51) Int. Cl.: H01R 13/53, H02G 15/068, H01R 3/00

(54) **Dispositif d'extrémité pour câble électrique**

(30) Priorité: 27.06.2013 FR 1356164
(71) Demandeur: Nexans, 75008 Paris (FR)
(72) Inventeur: Kebbabi, Lazhar, 69008 Lyon (FR); Allais, Arnaud, 69400 Limas (FR); Henaut, Fabian, 74490 Saint Jeoire (FR)
(74) Mandataire: Peguet, Wilfried

(57) **Abrégé**

La présente invention concerne un dispositif d'extrémité (1) pour câble électrique (10), ledit câble (10) comportant :
• un élément électriquement conducteur central allongé (11) ;
• une couche électriquement isolante (12) entourant ledit élément conducteur central (11) ; et
• une couche semi-conductrice externe (13) entourant la couche électriquement isolante (12) ;

le câble (10) comprenant une partie d'extrémité (10a) dépourvue au moins de la couche semi-conductrice externe (13), le dispositif d'extrémité (1) étant destiné à être disposé autour de la partie d'extrémité (10a) du câble (10), caractérisé en ce que le dispositif d'extrémité (1) comprend un corps polymérique (2) destiné à entourer la partie d'extrémité (10a) du câble (10), et un élément semi-conducteur (3) entourant au moins partiellement ledit corps polymérique (2), et en ce que, lorsque le dispositif d'extrémité (1) entoure la partie d'extrémité (10a) du câble (10), l'élément semi-conducteur (3) est positionné de sorte à être directement en contact physique avec la couche sem i-conductrice externe (13) dudit câble (10).

## Description

La présente invention se rapporte à un dispositif d'extrémité pour câble électrique.

Elle s'applique typiquement, mais non exclusivement, aux domaines des câbles d'énergie à moyenne tension (notamment de 6 à 45-60 kV) ou à haute tension (notamment supérieur à 60 kV, et pouvant aller jusqu'à 500-600 kV), qu'ils soient à courant continu ou alternatif.

Ce type de câble est bien connu de l'homme du métier et comporte généralement de l'intérieur vers l'extérieur :
- un élément électriquement conducteur central allongé ;
- une couche semi-conductrice dite interne entourant ledit élément conducteur central ;
- une couche électriquement isolante entourant ladite couche semi-conductrice interne ;
- une couche semi-conductrice dite externe entourant la couche électriquement isolante.

Optionnellement, ledit câble peut comprendre en outre :
- un écran de protection entourant ladite couche semi-conductrice externe ; et
- une gaine de protection extérieure entourant ledit écran de protection externe.

La partie d'extrémité du câble est dénudée afin de permettre l'accès à ses différentes parties constitutives et la mise en place d'un dispositif d'extrémité tel que par exemple un cône déflecteur, une terminaison ou une jonction.

Après dénudement, l'extrémité de la couche semi-conductrice externe présente généralement la forme d'un bord circonférentiel biseauté.

Il s'avère que cette partie du câble constitue une zone de vulnérabilité en raison notamment d'importantes contraintes diélectriques résultant d'une forte concentration des lignes équipotentielles. A des tensions élevées, ces contraintes diélectriques peuvent engendrer notamment des décharges électriques localisées en raison d'une augmentation de la valeur du champ électrique au-delà de la limite de rigidité diélectrique.

Afin d'éviter ces élévations brutales du champ électrique, il est connu d'utiliser un élément de contrôle du champ électrique tel qu'un cône déflecteur qui est disposé autour de la partie d'extrémité du câble. Ces cônes déflecteurs, comprennent généralement un matériau élastomère semi-conducteur, permettent de maintenir l'intensité du champ électrique en dessous de la limite de rigidité diélectrique.

Il s'avère néanmoins qu'après avoir disposé le cône déflecteur autour de la partie d'extrémité du câble, il arrive souvent que l'interface entre le matériau élastomère semi-conducteur du cône déflecteur et la couche électriquement isolante du câble ne soit pas parfaitement en contact physique, ce qui provoque une augmentation localisée de la valeur du champ électrique en raison de la présence d'espace(s) vide(s) entre le matériau élastomère semi-conducteur du cône déflecteur et la couche électriquement isolante du câble. L'augmentation de l'intensité du champ électrique peut également être renforcée par la présence d'impuretés, la rugosité des surfaces dénudées et l'absence de matière à l'intérieur de la couche électriquement isolante.

Le document WO 2011/144252 divulgue un dispositif d'extrémité disposé autour de la partie d'extrémité d'un câble haute tension qui, à la différence de la partie principale du câble, est dépourvue de couche semi-conductrice externe. Ce dispositif d'extrémité comprend notamment un organe de contrôle du champ électrique ainsi qu'une couche composée d'un matériau de contrôle du champ électrique revêtant l'organe de contrôle du champ électrique ainsi que la partie d'extrémité du câble. Cette couche de contrôle est connectée électriquement à la couche semi-conductrice externe revêtant la partie principale du câble, ce qui permet de contrôler l'intensité du champ électrique.

Toutefois, l'utilisation d'une telle couche de contrôle du champ électrique complique la réalisation du câble en raison notamment de la nécessité de l'appliquer sur la partie d'extrémité du câble.

Le but de la présente invention est de pallier les inconvénients des techniques de l'art antérieur en proposant un dispositif d'extrémité pour câble électrique qui permet de contrôler l'intensité du champ électrique, notamment au niveau de la jonction avec le câble électrique, ce dispositif pouvant être facilement et rapidement installé sur le câble.

A cet effet, la présente invention a pour objet un dispositif d'extrémité pour câble électrique, ledit câble comportant :
- un élément électriquement conducteur central allongé ;
- une couche électriquement isolante entourant ledit élément conducteur central ; et
- une couche semi-conductrice externe entourant la couche électriquement isolante ;
le câble comprenant une partie d'extrémité dépourvue au moins de la couche semi-conductrice externe, le dispositif d'extrémité étant destiné à être disposé autour de la partie d'extrémité du câble,
caractérisé en ce que le dispositif d'extrémité comprend un corps polymérique destiné à entourer la partie d'extrémité du câble, et un élément semi-conducteur entourant au moins partiellement ledit corps polymérique, et en ce que, lorsque le dispositif d'extrémité entoure la partie d'extrémité du câble, l'élément semi-conducteur est positionné de sorte à être directement en contact physique avec la couche semi-conductrice externe dudit câble.

Plus particulièrement, la partie du câble non dépourvue de la couche semi-conductrice externe est appelée « partie principale » du câble.

Grâce à l'invention, le dispositif d'extrémité selon l'invention est donc apte à assurer une continuité électrique entre la couche semi-conductrice externe du câble et ledit élément semi-conducteur du dispositif d'extrémité, ce qui permet avantageusement de contrôler l'intensité du champ électrique au niveau de la jonction entre la partie d'extrémité du câble et l'autre partie du câble qui comprend la couche semi-conductrice externe.

La structure et la conception du dispositif d'extrémité permettent à l'élément semi-conducteur d'être directement en contact physique avec la couche semi-conductrice externe dudit câble lorsque le dispositif d'extrémité entoure la partie d'extrémité du câble.

Préférentiellement, le dispositif d'extrémité selon l'invention est également apte, après avoir été disposé autour de la partie d'extrémité du câble, à assurer sensiblement une continuité du contact physique et électrique entre les couches électriquement isolante et semi-conductrice externe du câble. Les espaces vides pouvant se former entre la couche électriquement isolante et la couche semi-conductrice externe du câble lors du positionnement du dispositif d'extrémité autour de la partie d'extrémité du câble, sont ainsi avantageusement limités de façon significative, voire évités.

Plus particulièrement, la couche semi-conductrice externe du câble se trouvant à proximité de la partie d'extrémité du câble, demeure sensiblement au contact physique et électrique de la couche électriquement isolante, ce qui permet avantageusement de réduire grandement les risques de décharges et claquages électriques localisées.

De manière préférentielle, le dispositif d'extrémité est un cône déflecteur, une terminaison ou une jonction.

Dans un mode de réalisation particulier, le câble comporte une couche semi-conductrice interne positionnée entre ledit élément conducteur central et la couche électriquement isolante. De préférence, le câble électrique de l'invention est un câble d'énergie à moyenne tension (notamment de 6 à 45-60 kV) ou à haute tension (notamment supérieur à 60 kV, et pouvant aller jusqu'à 500-600 kV), qu'ils soient à courant continu ou alternatif, ce type de câble étant bien connu de l'homme du métier.

Préférentiellement, le corps polymérique comporte un bord transversal recouvert, au moins partiellement, par l'élément semi-conducteur, et qui est orienté de manière à ce que l'élément semi-conducteur soit directement en contact physique avec le bord circonférentiel de la couche semi-conductrice externe, lorsque le dispositif d'extrémité entoure la partie d'extrémité. Plus particulièrement, le bord circonférentiel de la couche semi-conductrice externe est directement en contact physique avec la surface extérieure de l'élément semi-conducteur.

Dans un mode de réalisation particulièrement avantageux, au moins une partie de la couche semi-conductrice externe, et plus particulièrement le bord circonférentiel de la couche semi-conductrice externe, se positionne autour d'au moins une partie de l'élément semi-conducteur.

La couche semi-conductrice externe de l'invention s'étend longitudinalement sur au moins une partie du câble électrique. Cette couche peut comprendre avantageusement un bord transversal, et plus particulièrement un bord biseauté, sensiblement de même pente que l'inclinaison de l'élément semi-conducteur. De ce fait, la surface de contact entre le bord transversale de la couche semi-conductrice et la surface extérieure de l'élément semi-conducteur est donc plane.

En d'autres termes, le bord circonférentiel de la couche semi-conductrice externe vient de préférence en appui sur au moins une partie de la surface extérieure de l'élément semi-conducteur.

L'élément semi-conducteur peut être composé d'un matériau polymère, de préférence à base de polymère(s) d'oléfine(s), notamment du type polymère d'éthylène et/ou polymère de propylène. A titre d'exemple, on peut citer l'EPDM (« Ethylene Propylène-Diène Monomère »), le polyéthylène, le polypropylène, ou les copolymères d'éthylène et de propylène.

L'élément semi-conducteur peut comprendre en outre des charges électriquement conductrices en quantité suffisante pour rendre le matériau polymère semi-conducteur.

Plus particulièrement, l'élément semi-conducteur peut être un matériau élastomère semi-conducteur.

Le corps polymérique peut être composé d'un matériau polymère, de préférence à base de polymère(s) d'oléfine(s), notamment du type polymère d'éthylène et/ou polymère de propylène. A titre d'exemple, on peut citer l'EPDM (« Ethylene Propylène-Diène Monomère »), le polyéthylène, le polypropylène, ou les copolymères d'éthylène et de propylène.

Plus particulièrement, le corps polymérique peut être un corps électriquement isolant.

De préférence, le corps polymérique ne comprend sensiblement pas de charges électriquement conductrices.

Dans la présente invention, on entend notamment par « couche semi-conductrice » ou « élément semi-conducteur », une couche ou un élément dont la conductivité électrique est généralement comprise entre 10⁻⁹ S.m⁻¹ et 10⁵ S.m⁻¹, à une température de 25°C.

On entend notamment par « couche électriquement isolante », ou « corps électriquement isolant », une couche ou un corps dont la conductivité électrique est inférieure à 10⁻⁹ S.m⁻¹, à une température de 25°C.

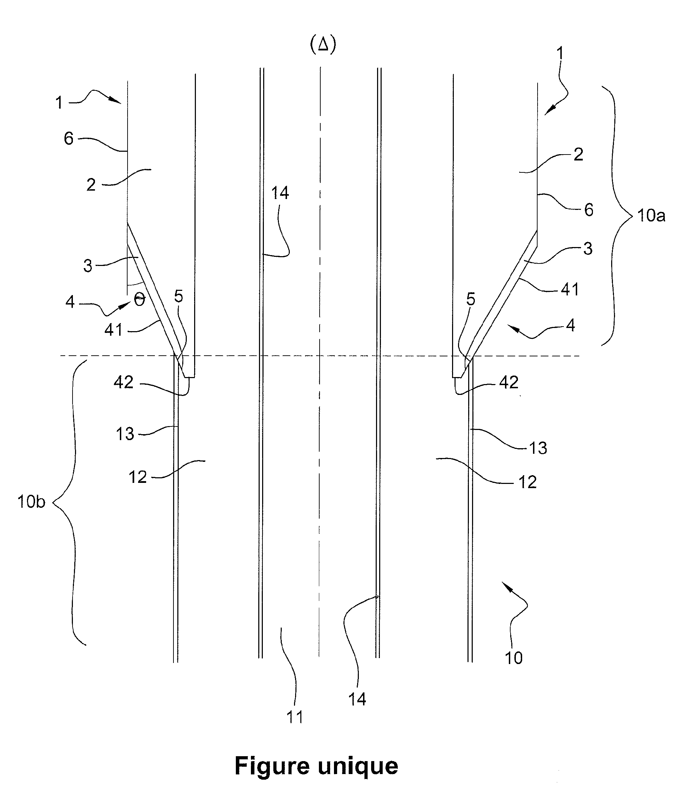

D'autres caractéristiques et avantages de la présente invention apparaîtront à la lumière des exemples qui vont suivre en référence à la figure ci-annexée, lesdits exemples et figure étant donnés à titre illustratif et nullement limitatif.

La figure unique est une représentation schématique selon une coupe longitudinale du dispositif d'extrémité, associé à un câble électrique, selon l'invention.

Tel que cela est représenté sur la figure unique, le dispositif d'extrémité selon l'invention est disposé autour d'un câble électrique 10. Ce câble électrique 10 comporte :
- un élément électriquement conducteur central allongé 11 ;
- une couche semi-conductrice interne 14 entourant l'élément électriquement conducteur central allongé 11 ;
- une couche électriquement isolante 12 entourant la couche semi-conductrice interne 14 ;
- une couche semi-conductrice externe 13 entourant la couche électriquement isolante 12.

Le câble 10 comprend une partie d'extrémité 10a dépourvue au moins de la couche semi-conductrice externe 13 et une partie principale 10b non dépourvue de cette couche 13. Cette partie d'extrémité 10a est partiellement ou totalement dénudée afin de pouvoir procéder au raccordement électrique du câble 10 à un autre dispositif électrique (non représenté). Le dispositif d'extrémité 1 selon l'invention est disposé autour de la partie d'extrémité 10a du câble 10.

Le dispositif d'extrémité 1 comprend :
- un corps polymérique 2 destiné à entourer la partie d'extrémité 10a du câble 10, ce corps polymérique 2 comportant un espace intérieur dans lequel s'introduit la partie d'extrémité 10a du câble 10 ; et
- un élément semi-conducteur 3 entourant au moins partiellement ledit corps polymérique 2, cet élément semi-conducteur 3 étant positionné de sorte à être directement en contact physique avec la couche semi-conductrice externe 13 dudit câble 10 lorsque le dispositif d'extrémité 1 entoure la partie d'extrémité 10a du câble 10.

Le corps polymérique 2 comporte un bord transversal 4 recouvert, au moins partiellement, par l'élément semi-conducteur 3, et qui est orienté de manière à ce que l'élément semi-conducteur 3 le recouvrant soit directement en contact physique avec le bord circonférentiel 5 de la couche semi-conductrice externe 13, lorsque le dispositif d'extrémité 1 entoure la partie d'extrémité 10a. Ce bord circonférentiel 5 correspond à l'endroit où la couche semi-conductrice externe 13 a été sectionnée afin de procéder au dénudement de la partie d'extrémité 10a.

Plus précisément, selon une coupe longitudinale du dispositif d'extrémité 1, tel que cela est représenté sur la figure unique, le dispositif d'extrémité 1 comporte :
- un bord longitudinal 6 sensiblement parallèle à l'axe longitudinal (Δ) du dispositif d'extrémité 1, ce bord longitudinal 6 étant notamment celui du corps polymérique 2 ;
- un bord transversal 4 prolongeant le bord longitudinal 6, ce bord transversal 4 étant notamment celui de l'élément semi-conducteur 3. Ce bord transversal 4 comprend une partie chanfreinée 41 dont l'angle θ est défini par l'intersection du bord longitudinal 6 et du bord transversal 4 qui peut varier de 15° à 60°. Le bord transversal du corps polymérique 2 est recouvert au moins partiellement par l'élément semi-conducteur 3, et prolongé par une partie formant une excroissance 42 s'étendant sensiblement perpendiculairement audit axe médian (Δ).

Le montage du dispositif d'extrémité 1 sur le câble 10 s'effectue en mettant en oeuvre les étapes suivantes :
- dénuder la partie d'extrémité 10a du câble 10 en retirant la couche semi-conductrice externe 13 ainsi qu'une épaisseur de la couche électriquement isolante 12, cette épaisseur étant au moins égale à l'épaisseur de ladite partie formant une excroissance 42 ;
- mettre en place le dispositif d'extrémité 1 autour de la partie d'extrémité 10a dénudée du câble 10, la partie formant une excroissance 42 étant enfoncée en force dans la couche électriquement isolante 12 de la partie principale 10b du câble 10 jusqu'à ce que l'élément semi-conducteur 3 soit directement en contact physique avec le bord circonférentiel 5 de la couche semi-conductrice externe 13.

De ce qui précède et au regard de l'unique figure, le bord circonférentiel 5 de la couche semi-conductrice externe 13 se positionne autour d'au moins une partie de l'élément semi-conducteur 3, la couche semi-conductrice externe 13 s'étendant longitudinalement sur la partie principale du câble électrique 10b.

Le bord circonférentiel 5 de la couche semi-conductrice externe est un bord biseauté de même pente que l'inclinaison de l'élément semi-conducteur 3 : la surface de contact entre le bord transversale 5 de la couche semi-conductrice 13 et la surface extérieure de l'élément semi-conducteur 3 est plane.

Le bord circonférentiel 5 de la couche semi-conductrice externe 13 vient ainsi en appui sur au moins une partie de la surface extérieure de l'élément semi-conducteur 3.

L'enfoncement en force de l'excroissance 42 dans la couche électriquement isolante 12 permet de maintenir le dispositif d'extrémité 1 mécaniquement en pression autour du câble 10, ce qui assure une mise en contact physique aux interfaces entre le câble 10 et le dispositif d'extrémité 1.

De cette façon, le dispositif d'extrémité 1 est apte à assurer une continuité électrique entre la couche semi-conductrice externe 13 du câble 10 et ledit élément semi-conducteur 3 du dispositif d'extrémité 1, ce qui permet avantageusement de contrôler l'intensité du champ électrique au niveau de la jonction entre la partie d'extrémité 10a du câble 10 et la partie principale 10b du câble 10.

En outre, le contact entre l'élément semi-conducteur 3 et le bord circonférentiel 5 permet d'assurer sensiblement une continuité du contact physique et électrique entre la couche électriquement isolante 12 et semi-conductrice externe 13 du câble 10. Les espaces vides pouvant se former entre la couche électriquement isolante 12 et la couche semi-conductrice externe 13 du câble 10 lors du positionnement du dispositif d'extrémité 1 autour de la partie d'extrémité 10a du câble 10, sont ainsi avantageusement limités de façon significative, voire évités.

Par ailleurs, dans l'hypothèse où un tel espace vide se formerait, ce dernier se trouverait isolé par l'élément semi-conducteur 3 et la couche semi-conductrice externe 13.

Le dispositif d'extrémité 1 peut être réalisé selon le procédé décrit ci-après.

Le corps polymérique 2 peut être extrudé ou moulé par des techniques bien connues de l'homme du métier. A titre d'exemple, ce peut être un matériau électriquement isolant:
- du type polyéthylène réticulé, commercialisé par la société Borealis sous les références LE4253, LE4253 LD ou LE4257, ou
- du type EPDM, commercialisé par la société Keltan sous la référence 2340A.

L'élément semi-conducteur 3 peut être quant à lui co-extrudé avec l'élément polymérique 2 ou moulé autour dudit corps polymérique 2. A titre d'exemple, ce peut être un matériau semi-conducteur :
- du type polyéthylène semi-conducteur, commercialisé par la société Borealis sous la référence LE0550, ou
- du type EPDM, commercialisé par la société Keltan sous la référence 2340A, chargé avec du noir de carbone en une quantité suffisante pour rendre ledit EPDM semi-conducteur.

## Revendications

1. Dispositif d'extrémité (1) pour câble électrique (10), ledit câble (10) comportant :
• un élément électriquement conducteur central allongé (11) ;
• une couche électriquement isolante (12) entourant ledit élément conducteur central (11) ; et
• une couche semi-conductrice externe (13) entourant la couche électriquement isolante (12) ;
le câble (10) comprenant une partie d'extrémité (10a) dépourvue au moins de la couche semi-conductrice externe (13), le dispositif d'extrémité (1) étant destiné à être disposé autour de la partie d'extrémité (10a) du câble (10), **caractérisé en ce que** le dispositif d'extrémité (1) comprend un corps polymérique (2) destiné à entourer la partie d'extrémité (10a) du câble (10), et un élément semi-conducteur (3) entourant au moins partiellement ledit corps polymérique (2), et **en ce que**, lorsque le dispositif d'extrémité (1) entoure la partie d'extrémité (10a) du câble (10), l'élément semi-conducteur (3) est positionné de sorte à être directement en contact physique avec la couche semi-conductrice externe (13) dudit câble (10).

2. Dispositif (1) selon la revendication 1, **caractérisé en ce qu'**il est apte, après avoir été disposé autour de la partie d'extrémité (10a) du câble (10), à assurer sensiblement une continuité du contact physique et électrique entre les couches électriquement isolante (12) et semi-conductrice externe (13) du câble (10).

3. Dispositif (1) selon la revendication 1 ou 2, **caractérisé en ce qu'**il est un cône déflecteur, une terminaison ou une jonction.

4. Dispositif (1) selon l'une quelconque des revendications précédentes, **caractérisé en ce que** le câble (10) comporte une couche semi-conductrice interne (14) positionnée entre ledit élément conducteur central (11) et la couche électriquement isolante (12).

5. Dispositif (1) selon l'une quelconque des revendications précédentes, **caractérisé en ce que** le corps polymérique (2) comporte un bord transversal (4) recouvert, au moins partiellement, par l'élément semi-conducteur (3), et qui est orienté de manière à ce que l'élément semi-conducteur (3) soit directement en contact physique avec le bord circonférentiel (5) de la couche semi-conductrice externe (13), lorsque le dispositif d'extrémité (1) entoure la partie d'extrémité (10a).

6. Dispositif (1) selon l'une quelconque des revendications, **caractérisé en ce qu'**au moins une partie de la couche semi-conductrice externe (13) se positionne autour d'au moins une partie de l'élément semi-conducteur (3).

7. Dispositif (1) selon l'une quelconque des revendications, **caractérisé en ce que** la couche semi-conductrice externe (13) s'étend longitudinalement sur au moins une partie du câble électrique (10), cette couche (13) comprenant un bord transversale sensiblement de même pente que l'inclinaison de l'élément semi-conducteur (3).

8. Dispositif (1) selon l'une quelconque des revendications, **caractérisé en ce que** le bord circonférentiel (5) de la couche semi-conductrice externe (13) vient en appui sur au moins une partie de la surface extérieure de l'élément semi-conducteur (3).

9. Dispositif (1) selon l'une quelconque des revendications précédentes, **caractérisé en ce que** l'élément semi-conducteur est composé d'un matériau polym ère.

10. Dispositif (1) selon la revendication 9, **caractérisé en ce que** le matériau polymère est un polymère d'éthylène et/ou un polymère de propylène.

11. Dispositif (1) selon l'une quelconque des revendications, **caractérisé en ce que** l'élément semi-conducteur (3) est un matériau élastomère semi-conducteur.
